# EUROPEAN PATENT APPLICATION

(11) **EP 4 822 467 A1**
(43) Date of publication of application: **14.10.2026**
(21) Application number: 26163114.7
(22) Date of filing: 09.03.2026
(51) Int. Cl.: G05B 19/4065, B23Q 17/12, B23Q 17/20

(54) **GENERATING A MAP OF FORCES**

(30) Priority: 08.04.2025 GB 202505259
(71) Applicant: Rolls-Royce plc, London N1 9FX (GB)
(72) Inventor: Premoli, Dennis, Derby, DE24 8BJ (GB)
(74) Representative: Rolls-Royce plc

(57) **Abstract**

A method of generating a map of forces transmitted between a tool of a machining apparatus and a workpiece during a machining operation. The method comprises receiving a measured force signal representative of forces transmitted between a tool of an apparatus and a workpiece during the machining operation; determining a corrected force signal by applying a correction function to the measured force signal, the correction function at least partly removing effects of resonance of the apparatus from the measured force signal; obtaining a plurality of corrected force data points from the corrected force signal; and mapping the corrected force data points to a plurality of position data points, each position data point representative of a position of the tool relative to the workpiece during the machining operation.

## Description

### FIELD

This disclosure relates to generating a map of forces transmitted between a tool of a machine and a workpiece during a machining operation.

### BACKGROUND

In many technical fields, including aerospace, it can be useful to understand the structure of materials used to form components. For example, it can be useful to identify any defects in the structure of a component. Such defects can arise, for example, in the forging and/or machining of components and have the potential to compromise the structural integrity, durability, fatigue life and performance of a component.

Known processes for material characterisation can be expensive, time consuming, and can require skilled personnel. Some of these processes also necessitate testing only a sample of a broader population of components, which introduces the risk that the sample is not representative of the population (for example, as a result of variation between batches).

### SUMMARY

According to a first aspect, there is provided a method of generating a map of forces transmitted between a tool of a machining apparatus and a workpiece during a machining operation, the method comprising: receiving a measured force signal representative of forces transmitted between a tool of an apparatus and a workpiece during the machining operation; determining a corrected force signal by applying a correction function to the measured force signal, the correction function at least partly removing effects of resonance of the apparatus from the measured force signal; obtaining a plurality of corrected force data points from the corrected force signal; and mapping the corrected force data points to a plurality of position data points, each position data point representative of a position of the tool relative to the workpiece during the machining operation.

The correction function may be based on a frequency response function of the machining apparatus. The correction function may be an inverse of the frequency response function of the machining apparatus.

The method may comprise determining the correction function. The method may comprise determining the frequency response function. Determining the frequency response function of the apparatus may be performed prior to performing the machining operation.

Determining the frequency response function may comprise applying a force input to a machining apparatus prior to the machining operation (i.e. at any point prior to the machining operation). The machining apparatus to which the input force is applied may be the machining apparatus used to perform the machining operation or may be a proxy machining apparatus that is representative of (i.e. similar or identical to) the machining apparatus used to perform the machining apparatus. The force input may be a known force input. The force input may be provided by a force input device controlled to provide the known force input. The force input may be measured, for example, by an accelerometer.

Determining the frequency response function may comprise measuring a force output resulting from the application of the force input.

The frequency response function may be determined based on the force input and the measured force output. Accordingly, the frequency response function may relate the force input to the measured force output.

The method may comprise determining the inverse of the frequency response function to provide the correction function.

The method may comprise converting the measured force signal from the time domain to the frequency domain. This conversion may be performed prior to application of the correction function to the measured force signal. Accordingly, application of the correction function to the measured force signal may be performed in the frequency domain.

The method may comprise receiving a plurality of measured force signals. The method may comprise, applying the correction function to the plurality of measured force signals. The correction function may be configured to at least partly remove effects of resonance of the apparatus from the plurality of measured force signals. The correction function may be in the form of a correction matrix.

The method may comprise plotting the corrected force data points to form a plot. The corrected force data points may be spatially arranged on the plot based on the position data points to which they are mapped. The corrected force data points may be plotted as a point cloud. The method may comprise plotting the corrected force data points as a two-dimensional point cloud. The method may comprise plotting the corrected force data points as a three-dimensional point cloud.

The method may comprise displaying the plotted corrected force data points (e.g. the plotted point cloud).

The method may comprise detecting a defect in the workpiece based on one or more of the force data points, position data points, and the mapping of the force data points to the position data points. Detection of the defect may be performed manually, for example by visual inspection of the plot of force data points (e.g. by an operator).

Detection of the defect may be performed by way of a machine learning algorithm. The machine learning algorithm may be trained on a dataset of previously observed and labelled material defects. At least one input to the machine learning algorithm may comprise a visual representation of the plotted corrected force data points. The machine learning algorithm may be an image recognition algorithm. The machine learning algorithm may be a convolutional neural network (CNN).

Determining the plurality of position data points may comprise detecting one or more of a position and a velocity of the tool relative to the workpiece during the machining operation.

One or more of the position data points may be determined based on a surface velocity of the tool relative to the workpiece and a prior position of the tool relative to the workpiece. For example, a given position data point may be determined by determining the displacement of the tool, relative to the workpiece from a previous position of the tool.

The method may comprise detecting a speed of rotation of the workpiece relative to the tool during the machining operation. The speed of rotation of the workpiece may be detected using a rotational speed sensor, such as a tachometer (e.g. an optical tachometer). The rotational speed sensor may be arranged to detect the rotational speed of the workpiece relative to the tool.

The method may comprise detecting the forces transmitted between the tool of the apparatus and the workpiece during a machining operation and generating a measured force signal. The forces may be detected by way of a dynamometer (e.g. a plate dynamometer or a rotational dynamometer).

The machining operation may be a turning operation. The machining operation may be a facing operation. Thus, for example, the machining operation may comprise cutting an end surface of the workpiece. The facing operation may comprise removing a layer of material from the end surface of the workpiece. The machining operation may be a face turning operation. The machining operation may be a milling operation.

The machining operation may comprise moving the tool relative to the workpiece along a spiral tool path. The spiral of the spiral tool path may be an Archimedean spiral.

The workpiece may form a component. That is, the workpiece may represent an intermediate stage in the manufacture of the component. The component may be an aerospace component. The component may be a component of a turbine engine (e.g. a turbine engine for an aircraft).

According to a second aspect, there is provided a system for generating a map of forces transmitted between a tool of a machining apparatus and a workpiece during a machining operation, the system comprising a machining apparatus and a processing arrangement. The machining apparatus comprises a machine comprising a tool, a holder for holding the workpiece, and a driver to move the tool relative to the workpiece; a first sensor configured to sense one or more of a movement and a position of the workpiece relative to the tool; and a second sensor configured to measure forces transmitted between the tool and the workpiece during the machining operation. The processing arrangement is configured to: receive a measured force signal from the second sensor, the measured force signal representative of the forces measured by the second sensor; determine a corrected force signal by applying a correction function to the measured force signal, the correction function configured to at least partly remove effects of resonance of the apparatus from the measured force signal; obtain a plurality of corrected force data points from the corrected force signal; and map the corrected force data points to a plurality of position data points, the position data points based on a signal received from the first sensor.

The correction function may be based on a frequency response function of the machining apparatus, which may be determined prior to the machining operation. The correction function may be an inverse of the frequency response function of the machining apparatus.

The processing arrangement may be configured to convert the measured force signal from the time domain to the frequency domain. The processing arrangement may be configured to perform this conversion prior to application of the correction function to the measured force signal. The processing arrangement may be configured to apply the correction function to the measured force signal in the frequency domain.

Application of the correction function to the measured force signal may comprise multiplying the correction function with the measured force signal.

The correction function may be stored in a memory of the processing arrangement.

The processing arrangement may be configured to plot the corrected force data points. The corrected force data points may be spatially arranged based on the position data points to which they are mapped. The processing arrangement may be configured to plot the corrected force data points as a point cloud (e.g. a two-dimensional or three-dimensional point cloud).

The processing arrangement may be configured to detect a defect in the workpiece based on one or more of the force data points, position data points, and the mapping of the force data points to the position data points.

The processing arrangement may be configured to detect a defect by way of a machine learning algorithm. The machine learning algorithm may be trained on a dataset of previously observed and labelled material defects. At least one input to the machine learning algorithm may comprise a visual representation of the plotted corrected force data points. The machine learning algorithm may be an image recognition algorithm. The machine learning algorithm may be a convolutional neural network (CNN).

The second sensor may form part of a force sensing device. The force sensing device may comprise a plurality of second sensors (e.g. force sensors). Each second sensor may be configured to measure forces transmitted between the tool and the workpiece during the machining operation. The force sensing device may be configured to output a plurality of measured force signals.

The processing arrangement may be configured to receive a plurality of measured force signals. The processing arrangement may be configured to apply the correction function to the plurality of measured force signals. The correction function may be configured to at least partly remove effects of resonance of the apparatus from the plurality of measured force signals. The correction function may be in the form of a correction matrix.

The first sensor may be a rotational speed sensor configured to measure the rotational speed of the workpiece relative to the tool. The rotational speed sensor may be a tachometer (e.g. an optical tachometer).

The processing arrangement may be configured to determine the surface velocity of the tool relative to the workpiece based on measurements made by the first sensor. The processing arrangement may be configured to determine the one or more position data points based on the surface velocity of the tool relative to the workpiece and a prior position of the tool relative to the workpiece. For example, a given position data point may be determined by determining the displacement of the tool, relative to the workpiece from a previous position of the tool.

The machine may be configured to perform a facing operation. The machine may be configured to cut an end surface of the workpiece. The machine may be configured to remove a layer of material from the end surface of the workpiece in use. The machine may be configured to perform a face turning operation. The machine may be configured to perform a milling operation. The machine may be configured to move the tool along a spiral tool path relative to the workpiece. The spiral tool path may be an Archimedean spiral.

The machine may be configured for performing a machining operation on a workpiece as an intermediate stage in the manufacture of an aerospace component, such as a component of a turbine engine (e.g. for an aircraft).

The second sensor may be a sensor of a dynamometer (e.g. a plate dynamometer or rotational dynamometer). The second sensor may be mounted to the tool.

In a third aspect, there is provided a non-transitory computer readable storage medium comprising computer readable instructions that, when read by a computer, cause performance of the method as described above with respect to the first aspect.

### BRIEF DESCRIPTION OF THE DRAWINGS

Embodiments will now be described by way of example only with reference to the accompanying drawings, in which:
**FIG. 1** is a schematic view of a system for generating a map of forces transmitted during a machining operation;
**FIG. 2A** and **FIG. 2B** are respective front and top section views of a plate dynamometer of the system of FIG. 1;
**FIG. 3** is a flow chart illustrating a method of generating a map of forces transmitted during a machining operation;
**FIG. 4** is a schematic view showing a tool path of a tool of the system of FIG. 1;
**FIG. 5** is an exemplary plot of force data points generatable by the system of FIG. 1; and
**FIG. 6** is a flow chart illustrating a method of determining a correction function for use in the method of FIG. 3.

### DETAILED DESCRIPTION

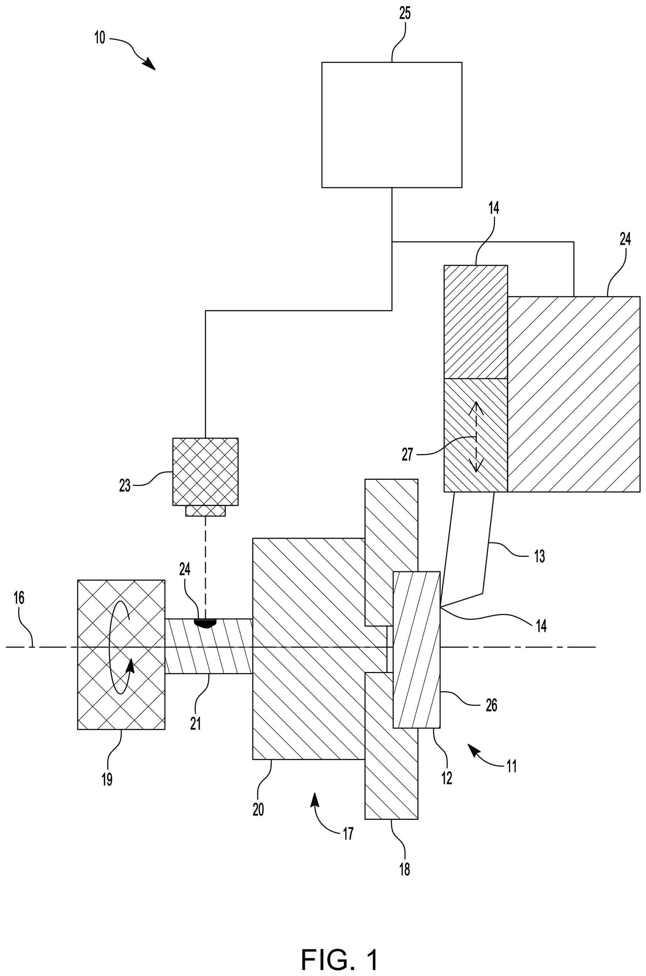

**FIG. 1** illustrates a system 10 for generating a map of forces transmitted during a machining operation performed by a machine 11 on a workpiece 12. In the present example, the machine 11 is configured for performing a facing operation on the workpiece 12, in particular a face turning operation. The machine 11 may alternatively or additionally be configured to perform other operations, such as milling (e.g. 3D milling).

The workpiece 12 in the present example is cylindrical and has an end surface 26 upon which the facing operation is performed. The machine 11 comprises a tool 13 having a cutting edge 14 that is arranged to make contact with the end surface 26 of the workpiece 12 to perform the facing operation. During the machining operation, the cutting edge 14 of the tool 13 is moved against the end surface 26 of the workpiece 12 to apply a cutting force to the end surface 26 of the workpiece 12 to remove material from the end surface 26.

The workpiece 12 is held by a holder 17 (e.g. a chuck) of the machine 11. The holder 17 has a body 20 and moveable grip portions 18 that can be moved to grip the workpiece 12. The body 20 of the holder 17 is connected to a first driver 19 (e.g. a motor) of the system 10 by a spindle 21. The first driver 19 is configured to drive the holder 17, via the spindle 21, to rotate the holder 17 about a rotational axis 16, causing the workpiece 12 to also rotate about the rotational axis 16.

The tool 13 is also moveable along a radially-extending axis (such movement indicated by arrows 27). In the illustrated example, this movement is provided by a second driver 15, but in other examples the tool 13 may be operatively connected to the first driver 19 (e.g. by a gearing arrangement) to be driven to move radially by the first driver 19.

Although not shown, the machine 11 may also be configured to provide relative movement of the tool 13 and the workpiece 12 in a direction along the rotational axis 16 to bring the tool 13 into contact with the end surface 26 of the workpiece 12.

To perform a face turning operation, the workpiece 12 is rotated (by the first driver 19) and, concurrently, the tool 13 is moved (by the second driver 15) towards the rotational axis 16. The tool 13 is moved along the radial axis 27 according to a feed rate, which is defined as a linear displacement of the tool 13 per rotation of the workpiece 12.

The system 10 further comprises a first sensor in the form of a rotational speed sensor 23 arranged to measure the rotational speed of the spindle 21 (and thus the rotational speed of the workpiece 12 relative to the tool 13). In the present example, the rotational speed sensor 23 is an optical tachometer. To facilitate measurement of the rotational speed, a reflective marker 22 is mounted to the spindle 21. The reflective marker 22 is optically detectable by the rotational speed sensor 23 such that the rotational speed sensor 23 is able to detect each time a full rotation of the spindle 21 has occurred (which can then be used to determine the rotational speed of the spindle 21 and the workpiece 12).

A force sensing device 24 is mounted to the tool 13. The force sensing device 24 comprises a plurality of second sensors, in the form of force sensors 30, that allow the force sensing device 24 to be able to measure forces that are transmitted between the tool 13 and the workpiece 12. In the illustrated example, the force sensing device 24 is a plate dynamometer comprising four force sensors 30. One example of a suitable plate dynamometer is the Kistler 9129AA MidiDyno plate dynamometer, available from Kistler Instrumente AG of Winterthur, Switzerland. This plate dynamometer may, for example, be mounted by way of Kistler 9129AE25 tool holder.

Together, the machine 11, force sensing device 24, and rotational speed sensor 23 provide a machining apparatus 28.

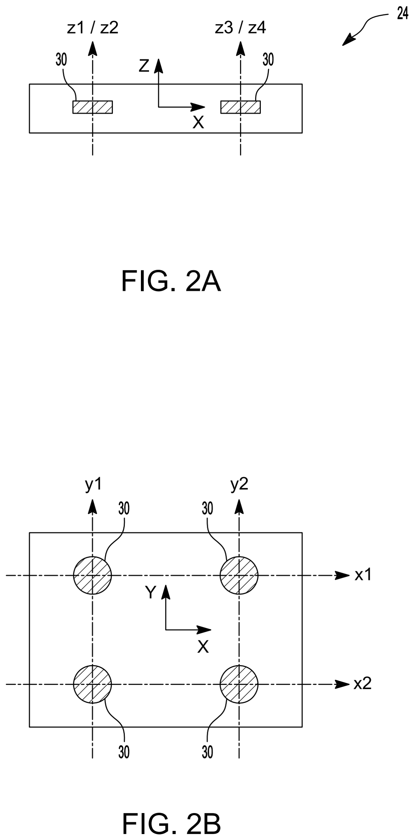

The force sensing device 24 is illustrated schematically in **FIG. 2A** and **FIG. 2B****.** The force sensors 30 are arranged in a single plane and in a rectangular pattern (i.e. positioned on the corners of a reference rectangle). Each of the four sensors 30 is configured to sense force in three directions (X, Y, Z). Due to the arrangement of the sensors 30, the force sensing device 24 can provide a total of eight force measurements made along different axes (x1, x2, y1, y2, z1, z2, z3, z4). The force sensing device 24 is configured to provide these measurements as measured force signals on eight respective channels.

The force sensing device 24 is oriented in the system 10 to measure forces along each of the rotational axis 16, the radial axis 27, and a direction that is perpendicular to the rotational axis 16 and radial axis 27 (i.e. into and out of the page as illustrated in FIG. 1).

Returning to FIG. 1, both the rotational speed sensor 23 and the force sensing device 24 are operatively connected to a processing arrangement 25 for transmission of signals to the processing arrangement 25. The processing arrangement 25 may comprise a data acquisition (DAQ) system for receipt of the signals from the rotational speed sensor 23 and the force sensing device 24. An amplifier may also be to amplify signals provided by the force sensing device 24 to the processing arrangement 25. The processing arrangement 25 is configured to use the signals provided by the rotational speed sensor 23 and the force sensor 30 to generate a map of cutting forces transmitted between the tool 13 and the workpiece 12 during a machining operation.

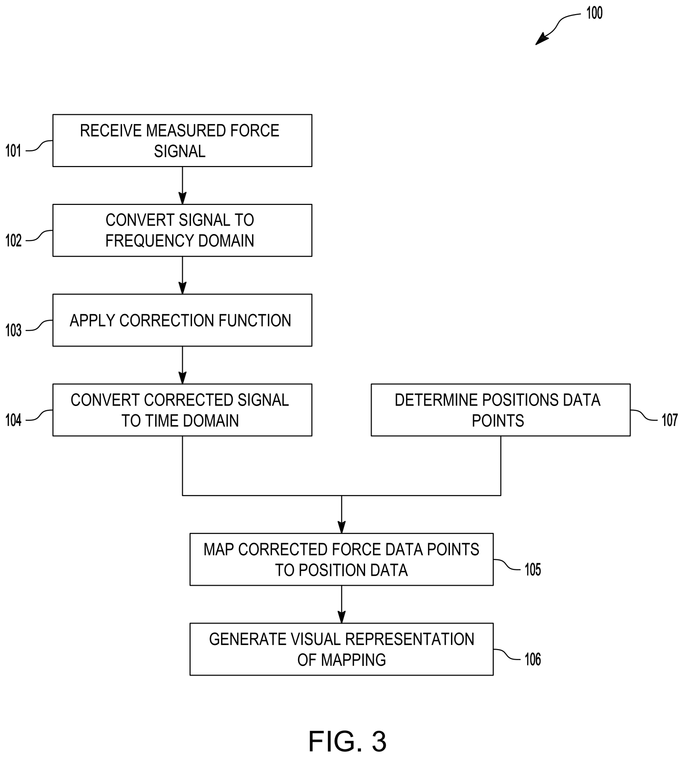

An exemplary method 100 for generating a map of forces transmitted during a machining operation on a workpiece is illustrated by **FIG. 3****.** This method may, for example, be performed by the processing arrangement 25 of the system 10 of FIG. 1 and will be described in this context (but it should be appreciated that the method may be performed in other systems that may be configured to perform different machining operations, such as milling).

The method 100 may be performed on a single measured force signal, or may be performed on a plurality of measured force signals. For example, as explained above, in the system 10 of FIG. 1 the processing arrangement 25 receives (from the force sensing device 24) eight measured force signals on eight individual channels.

At step 101, the method comprises receiving measured force signals from the force sensors 30 of the force sensing device 24 during a machining operation. The sensitivity of the of the force sensors 30 means that, in addition to detecting forces transmitted between the tool 13 and the workpiece 12, the force sensors 30 also detect forces resulting from modal vibration of various components of the system 10 (e.g. the holder 17, spindle 21, and the force sensing device 24). Accordingly, the measured force signals that are received from the force sensing device 24 are not solely representative of the cutting forces transmitted between tool 13 and the workpiece 12. A force map produced directly using such signals will thus include inaccuracies that could negatively impact the utility of the force map (i.e. the force map will not be truly representative of the forces transmitted between the tool and workpiece).

To account for the modal vibrations of the system, the method 100 comprises steps for correcting the received measured force signals. To perform this correction, the measured force signals are first converted to the frequency domain (in step 102). This may be performed using a Fourier transform (e.g. using a fast Fourier transform (FFT) method). While in the frequency domain, a correction function that is in the form of a correction matrix is applied to the measured force signals (i.e. by multiplication of the correction matrix with a vector of the measured force signals) to form corrected force signals (at step 103). The correction function may be stored in a memory of the processing arrangement. A more detailed explanation of the correction matrix and its application is provided further below. In general, however, the correction matrix is configured to (at least partly) remove effects of the modal vibrations of the system from the measured force signals, so that the corrected force signals are more representative of the actual forces transmitted between the tool 13 and the workpiece 12 (i.e. the cutting forces).

After the correction matrix has been applied to the measured force signals, at step 104, the corrected force signals are converted to the time domain (using an inverse Fourier transform, such as an inverse FFT method).

A plurality of corrected force data points can be obtained from each of corrected force signals, each corrected force data point corresponding to an (uncorrected) measured force data point provided by the force sensor during the machine operation. To provide the force map, in step 105, these corrected force data points are mapped to position data points (obtained at step 106). In particular, each corrected force data point is mapped to a position data point that is representative of the location of the cutting edge 14 of the tool 13 on the workpiece 12 at the time of measurement of the respective force. To achieve this mapping, the position data and corrected force signals can be time-synchronised. By way of example, each force data point can be associated with a corresponding time stamp (representative of the time at which the corresponding force measurement was made), which can be used to map the force data point to the correct position data point of the position data.

The way in which the position of the tool is determined will be dependent on the configuration of the system and the machining process that is performed. In the example system 10 of FIG. 1, each position of the tool is determined based on the feed rate of the tool 13 and measurements made by the rotational speed sensor 23.

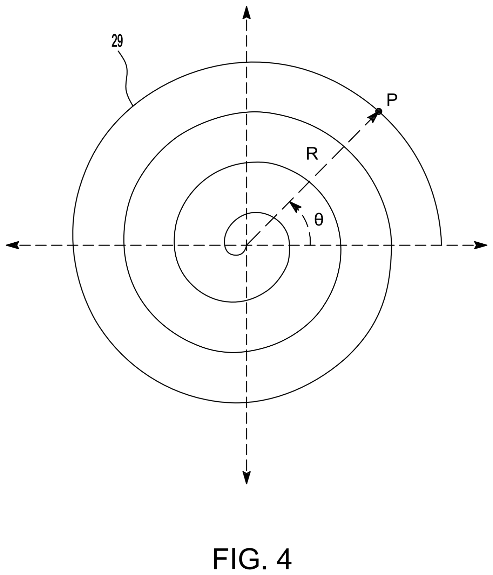

During the machining (i.e. facing) operation the workpiece 12 is rotated by the first driver 19 and, concurrently, the tool 13 is moved radially inwardly (with respect to the rotational axis 16). The resulting movement of the cutting edge 14 of the tool 13 is illustrated **by** **FIG. 4****.** As is apparent from this figure, the combined rotational movement of the workpiece 12 (relative to the tool 13) and the linear (radial) movement of the tool 13 results in the cutting edge 14 following a spiral tool path 29 across the end surface 26 of the workpiece 12. As should also be apparent from this figure, any position P of the cutting edge 14 along the spiral tool path 29 can be defined using polar coordinates by an angle θ and a radial distance R.

The polar coordinates of any position P of the cutting edge 14 can thus be determined using the following two equations: [Equation 1] ${θ}_{i} = {θ}_{i - 1} + \left({RPM}_{i}\times \frac{π}{30}\times δt\right)$ [Equation 2] ${ρ}_{i} = {ρ}_{i - 1} + \left({f}_{n}\times \frac{{RPM}_{i}}{60}\times δt\right)$ where:
*θᵢ* is the angular position of the cutting edge (radians) at time *t*;
*θ*_{*i*-1} is a previous angular position of the cutting edge at time *t*₋₁;
*RPMᵢ* is the instantaneous rotational speed of the tool relative to the workpiece at time t;
*pᵢ* is the radial position of the cutting edge (mm) at time t;
*ρ*_{*i*-1} is a previous radial position of the cutting edge at time *t*₋₁;
*fₙ* is the feed rate of the tool (mm/rev); and
*δt* is the difference in time between time *t* and previous time *t*₋₁.

The rotational speed of the tool 13 relative to the workpiece 12 is obtained from the rotational speed sensor 23 and may be determined by linearly interpolating between each detection of the reflective marker 22 (e.g. indicated by a voltage pulse generated by the rotational speed sensor 23). The use of an external sensor can provide more accurate positional data than, for example, relying on a speed setting of the machine (due to inaccuracies inherent in PID control of such machines).

As may be appreciated, this method of parametrically determining the tool path may be adapted for use with other machine operations. For example, the tool path may be determined in a similar manner for a milling operation, by further incorporating translational movement of the tool 13.

During the machining operation, the rotational speed of the tool 13 relative to the workpiece 12 can be controlled to provide a substantially constant surface velocity (of the tool 13 relative to the workpiece 12). As may be appreciated, when a constant rotational speed is used, the surface velocity of the tool 13 will decrease as the tool 13 is moved towards the rotational axis 16. To maintain a constant surface velocity (of the tool 13 relative to the workpiece 12), the rotational speed of the tool 13 relative to the workpiece 12 can be increased exponentially as the machining operation is performed. This can help to ensure that force measurements (i.e. taken at a constant sample rate) are taken evenly across the surface of the workpiece 12.

While in the present example movement of the tool 13 relative to the workpiece 12 is determined by measuring the rotational speed of the tool 13, in other examples other methods may be used to determine the movement and/or position of the tool 13. For example, a LiDAR based system could be used to detect the position of the tool 13 and to track movement of the tool 13.

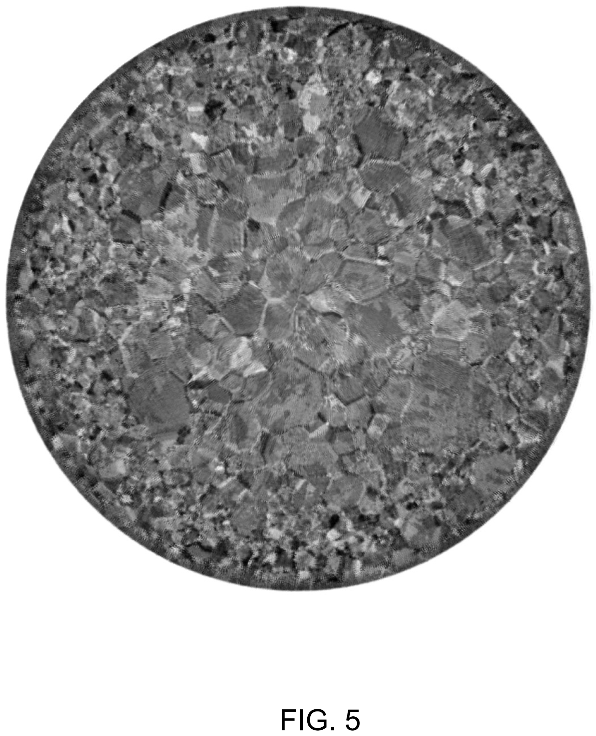

Returning to FIG. 3, once mapped, the force data points may be plotted. Such plotting may provide a visual representation of the mapping. An example of such a visual representation is shown graphically in **FIG. 5****.** This visual representation is formed by plotting the corrected force data points as a 2D point cloud based on the position data points to which the corrected force data points are mapped (the magnitude of each corrected force data point being represented visually, such as by varying colour or shade). In other examples, for example when the machining operation involves movement in three dimensions, the force data points can be plotted as a 3D point cloud.

As should be appreciated from FIG. 5, the sensitivity of the sensors 30 is such that the visual representation of the mapped force data points depicts the microstructure of the end surface 26 of the workpiece 12 (i.e. the visual representation can be considered a microstructural map of the end surface 26 of the workpiece 12). The visual representation can therefore be useful for the detection of material defects in the workpiece 12, such as voids, inclusions, cracks, and macro zones.

Such material defects may be identified by manual observation of the visual representation (e.g. by an operator). Alternatively or additionally, a machine learning algorithm may be used to detect material defects. Such a machine learning algorithm may be trained on a dataset of previously observed and labelled material defects.

The machine learning algorithm may, for example, be an image recognition algorithm (e.g. making use of a convolutional neural network (CNN)) configured to detect material defects in a visual representation of the force data points (such as that shown in FIG. 5). Alternatively, or additionally, the machine learning algorithm may be configured to detect material defects based on the data itself (i.e. the force data points, positions, and their mappings).

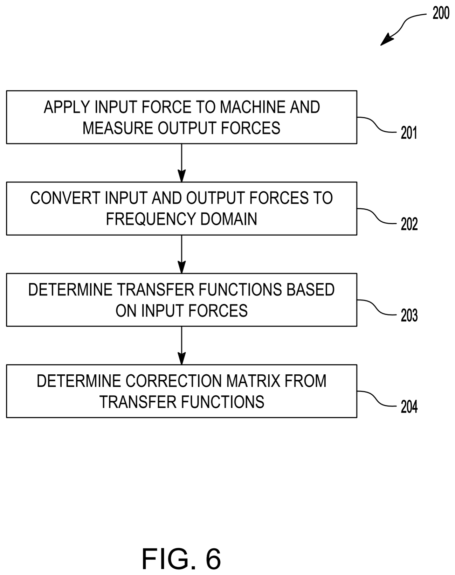

**FIG. 6** illustrates in further detail how the correction matrix used in step 103 of the method 100 of FIG. 3 can be determined. The general premise on which the correction matrix based is that if there is an actual force and a suboptimal measurement of said force, then it follows that a correction function exists (in this case applied by way of a matrix) that can be applied to the suboptimal measurement to arrive at the actual force. If both the actual force and suboptimal measurement are known, then the correction function can be determined. In operating conditions (i.e. during a machining operation) that is not the case, because the actual force is not known. However, under experimental conditions a known force can be applied and the suboptimal measurement made in order to determine the correction function.

In the present example, the correction matrix is determined experimentally by way of testing performed on the machining apparatus (e.g. the machining apparatus 28) that will subsequently be used to carry out the machining operation. The testing may alternatively or additionally be performed on a representative (i.e. proxy) machining apparatus (e.g. a different machining apparatus to that used for the machining process, but that is nevertheless of similar or identical structure to the machining apparatus used to carry out the machining operation).

In step 201, an input force is applied to the machine and the resultant force output is measured by the force sensors 30. The input force may be measured, or may be a known force (e.g. applied by a transducer controlled to apply the known force). The input force may be provided, for example, by a force input device such as an impact hammer (e.g. having a load sensor) or a shaker device. In the case of an impact hammer, an accelerometer (e.g. positioned so as to be aligned along the axis of impact, proximate to the point of impact) may be used to determine the input force. Impacts may be made along three different axes (e.g. the **X, Y,** and Z axes identified in FIG. 2A and FIG. 2B) and multiple impacts may be made along each axis.

At step 202, both the known input force signals and the resultant output signals (as measured by the force sensors 30) are converted from the time domain to the frequency domain (using a Fourier transform, such as fast Fourier transform method).

At step 203, a transfer function (also known as a frequency response function (FRF)) is then determined for each combination of input force and measured output force. Each FRF is determined, for example, using the H1 estimator.

As explained above, the input forces are determined along three axes, because cutting forces during a machining operation will also occur along three axes (X, Y, Z). In the case that multiple tests are performed on each axis, the results can be averaged (i.e. to provide an FRF based on the average). The force sensing device 24 of the system 10 provides output signals (i.e. measured force signals) on eight different channels. Accordingly, in the case of system 10 of FIG. 1, there will be a total of 24 combinations of input force and measured output force (and thus a total of 24 FRFs provided by the testing). These 24 FRFs are arranged in a matrix referred to herein as the frequency response matrix.

At step 204, the correction matrix is determined from the frequency response matrix. The frequency response matrix describes the transformation of actual force into a measured force (i.e. as measured by the force sensors 30). The purpose of the correction function, on the other hand, is to transform (i.e. correct) the measured forces into the actual cutting forces. Thus, to obtain the correction matrix, the frequency response matrix is inverted. The obtained correction matrix can then be multiplied with the measured force signals in the frequency domain (as described with respect to FIG. 3) to obtain the corrected force signals (which can then be returned to the time domain). As already explained above, the corrected force signals will more accurately represent the cutting forces transmitted between the cutting tool 13 and the workpiece 12 (by at least partial removal modal vibrations from the measured force signals).

When the frequency response matrix is rectangular (so as not to be directly invertible), the frequency response matrix can be multiplied by its Hermitian transpose to form a square (i.e. invertible) matrix. In this case, the Hermitian transpose of the frequency matrix is multiplied with the vector of force signals prior to multiplication with the correction matrix. In other words, the actual cutting forces may be determined as follows: 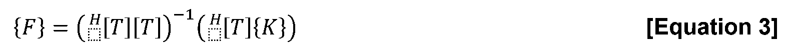 where:
{*F*} is the vector of corrected forces (in the frequency domain);
[*T*] is the frequency response matrix (and 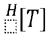 is the Hermitian transpose of this matrix); and
{*K*} is the vector of measured forces (in the frequency domain).

The correction function (e.g. correction matrix) may be stored in a memory of the processing arrangement for use in the correction of measured force signals in subsequent machining operations.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A method (100) of generating a map of forces transmitted between a tool (13) of a machining apparatus (28) and a workpiece (12) during a machining operation, the method comprising:
receiving a measured force signal representative of forces transmitted between a tool of an apparatus and a workpiece during the machining operation;
determining a corrected force signal by applying a correction function to the measured force signal, the correction function at least partly removing effects of resonance of the apparatus from the measured force signal;
obtaining a plurality of corrected force data points from the corrected force signal; and
mapping the corrected force data points to a plurality of position data points, each position data point representative of a position of the tool (13) relative to the workpiece (12) during the machining operation.

2. The method according to claim 1, wherein the correction function is based on a frequency response function of the machining apparatus (28).

3. The method according to claim 2, comprising determining the frequency response function of the apparatus prior to performing the machining operation.

4. The method according to claim 3, wherein determining the frequency response function comprises:
applying a force input to a machining apparatus prior to the machining operation;
measuring a force output resulting from the application of the force input;
determining the frequency response function based on the force input and measured force output; and,
optionally, the method additionally comprises determining an inverse of the frequency response function to provide the correction function.

5. The method according to any one of the preceding claims, comprising converting the measured force signal from the time domain to the frequency domain, and wherein application of the correction function to the measured force signal is performed in the frequency domain.

6. The method according to any one of the preceding claims, comprising receiving a plurality of measured force signals and applying the correction function to the plurality of measured force signals.

7. The method according to any one of the preceding claims, comprising plotting the corrected force data points to form a plot, the corrected force data points being spatially arranged on the plot based on the position data points to which they are mapped.

8. The method according to any one of the preceding claims, comprising detecting a defect in the workpiece based on the corrected force data points, position data points, and the mapping of the corrected force data points to the position data points.

9. The method according to any one of the preceding claims, comprising determining the plurality of position data points by detecting one or more of a position and a speed of the tool relative to the workpiece during the machining operation.

10. The method according to claim 9, wherein one or more of the position data points are determined based on a surface velocity of the tool relative to the workpiece and a prior position of the tool.

11. The method according to any one of the preceding claims, comprising detecting a speed of rotation of the workpiece relative to the tool during the machining operation.

12. The method according to any one of the preceding claims, wherein the machining operation is a facing operation.

13. The method according to any one of the preceding claims, wherein the workpiece forms a component of a gas turbine engine for an aircraft.

14. A system (10) for generating a map of forces transmitted between a tool (13) of a machining apparatus and a workpiece (12) during a machining operation, the system (10) comprising:
a machining apparatus (28) comprising:
a machine (11) comprising a tool (13), a holder (17) for holding the workpiece (12), and a driver to move the tool (13) relative to the workpiece (12);
a first sensor configured to sense one or more of a movement and a position of the workpiece (12) relative to the tool (13); and
a second sensor configured to measure forces transmitted between the tool (13) and the workpiece (12) during the machining operation; and
a processing arrangement configured to:
receive a measured force signal from the second sensor, the measured force signal representative of the forces measured by the second sensor;
determine a corrected force signal by applying a correction function to the measured force signal, the correction function configured to at least partly remove effects of resonance of the apparatus from the measured force signal;
obtain a plurality of corrected force data points from the corrected force signal; and
map the corrected force data points to a plurality of position data points, the position data points based on a signal received from the first sensor.

15. A non-transitory computer-readable medium having computer-readable instructions encoded thereon that, when executed by a computer, cause the computer to perform the method of any one of claims 1 to 9.
